# EUROPEAN PATENT APPLICATION

(11) **EP 4 712 558 A1**
(43) Date of publication of application: **18.03.2026**
(21) Application number: 23936892.1
(22) Date of filing: 12.05.2023
(51) Int. Cl.: H04W 36/00

(54) **MEASUREMENT DETERMINATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Gunzelmann, Rainer
(86) International application number: PCT/CN2023/094080
(87) International publication number: WO 2024/234202

(57) **Abstract**

The present disclosure relates to the technical field of communications, and specifically relates to a measurement determination method and apparatus, and a communication device and a storage medium. The measurement determination method comprises: according to whether a network device is configured with area information associated with a first frequency, determining whether to measure the first frequency. According to the present disclosure, a terminal may determine, according to whether a network device of a cell where the terminal is located is configured with area information associated with a first frequency, whether to measure the first frequency. When it is difficult for the terminal to re-select a cell corresponding to the first frequency, the terminal may determine to not measure the first frequency, thereby avoiding unnecessary measurement, and thus reducing the power consumption of the terminal.

## Description

### TECHNICAL FIELD

The disclosure relates to the field of communication technologies, and in particular to a method and an apparatus for measurement determination, a communication device, a communication system, and a storage medium.

### BACKGROUND

When a terminal is located in a cell in a non-terrestrial network (NTN), the terminal may perform cell reselection to reselect to a cell in a terrestrial network (TN). However, some problems may exist during the cell reselection procedure.

### SUMMARY

Embodiments of the disclosure provide a method and an apparatus for measurement determination, a communication device, a communication system, and a storage medium, to solve the technical problems in the related art.

According to a first aspect of embodiments of the disclosure, a method for measurement determination is provided. The method is performed by a terminal, including: determining, based on whether area information associated with a first frequency is configured by a network device, whether to measure the first frequency.

According to a second aspect of embodiments of the disclosure, a method for measurement determination is provided. The method is performed by a network device, including: communicating with the terminal performing the above method for measurement determination.

According to a third aspect of embodiments of the disclosure, an apparatus for measurement determination is provided. The apparatus includes: a processing module, configured to determine, based on whether area information associated with a first frequency is configured by a network device, whether to measure the first frequency.

According to a fourth aspect of embodiments of the disclosure, an apparatus for measurement determination is provided. The apparatus includes: a communicating module, configured to communicate with the terminal performing above method for measurement determination.

According to a fifth aspect of embodiments of the disclosure, a communication device is provided. The communication device includes: one or more processors, configured to call instructions and cause the communication device to implement the above method for measurement determination.

According to a sixth aspect of embodiments of the disclosure, a communication system is provided. The communication system includes: a terminal configured to perform the above method for measurement determination in the first aspect, and a network device configured to perform the above method for measurement determination in the second aspect.

According to a seventh aspect of embodiments of the disclosure, a storage medium is provided. The storage medium stores instructions that, when executed on a communication device, cause the communication device to implement the above method for measurement determination.

According to embodiments of the disclosure, the terminal may determine, based on whether the area information associated with the first frequency is configured by the network device of the serving cell where the terminal is located, whether to measure the first frequency. In a case that the terminal is difficult to reselect to the cell corresponding to the first frequency, the terminal may determine not to measure the first frequency, to avoid unnecessary measurement and save power consumption of the terminal.

### BRIEF DESCRIPTION OF THE DRAWINGS

In order to more clearly illustrate embodiments of the disclosure, accompanying drawings needed to be used in the description of the embodiments are introduced briefly below. Apparently, the accompanying drawings described below are only a part of embodiments of the disclosure. For the ordinary skilled in the art, other drawings may further be obtained based on these accompanying drawings without creative works.
FIG. 1A is an architecture diagram illustrating a communication system according to an embodiment of the disclosure.
FIG. 1B is an interaction diagram illustrating a method for measurement determination according to an embodiment of the disclosure.
FIG. 2 is a flowchart illustrating a method for measurement determination according to an embodiment of the disclosure.
FIG. 3 is a flowchart illustrating another method for measurement determination according to an embodiment of the disclosure.
FIG. 4 is a flowchart illustrating yet another method for measurement determination according to an embodiment of the disclosure.
FIG. 5 is a flowchart illustrating a communication method according to an embodiment of the disclosure.
FIG. 6 is a block diagram illustrating an apparatus for measurement determination according to an embodiment of the disclosure.
FIG. 7 is a block diagram illustrating an apparatus for measurement determination according to an embodiment of the disclosure.
FIG. 8 is a block diagram illustrating a communication device according to an embodiment of the disclosure.
FIG. 9 is a block diagram illustrating a chip according to an embodiment of the disclosure.

### DETAILED DESCRIPTION

Embodiments of the disclosure provide a method and an apparatus for measurement determination, a communication device, a communication system, and a storage medium.

In a first aspect, embodiments of the disclosure provide a method for measurement determination. The method is performed by a terminal, including: determining, based on whether area information associated with a first frequency is configured by a network device, whether to measure the first frequency.

In the above embodiments, in a case that the area information associated with the first frequency is configured by the network device, the terminal may determine whether the terminal is within an area determined based on the area information. If the terminal is within the area determined based on the area information, then the terminal may reselect to a cell corresponding to the first frequency, and may determine to measure the first frequency for reselecting to the cell corresponding to the first frequency in a timely manner. If the terminal is not within the area determined based on the area information, then it is difficult for the terminal to reselect to the cell corresponding to the first frequency, and the terminal may determine not to measure the first frequency, to avoid unnecessary measurement and save power consumption of the terminal. If the area information associated with the first frequency is not configured by the network device, then the terminal cannot determine whether the terminal may reselect to the cell corresponding to the first frequency, and the terminal still needs to measure the first frequency for reselecting to the cell corresponding to the first frequency in a timely manner.

In combination with some embodiments of the first aspect, in some embodiments, determining, based on whether the area information associated with the first frequency is configured by the network device, whether to measure the first frequency includes: in a case that the area information associated with the first frequency is configured by the network device, and the terminal is within an area, determining to measure the first frequency.

In combination with some embodiments of the first aspect, in some embodiments, determining, based on whether the area information associated with the first frequency is configured by the network device, whether to measure the first frequency includes: in a case that the area information associated with the first frequency is configured by the network device, and the terminal is not within an area, determining not to measure the first frequency.

In combination with some embodiments of the first aspect, in some embodiments, determining, based on whether the area information associated with the first frequency is configured by the network device, whether to measure the first frequency includes: in a case that the area information associated with the first frequency is not configured by the network device, determining to measure the first frequency.

In combination with some embodiments of the first aspect, in some embodiments, a reselection priority of the first frequency is higher than a reselection priority of a second frequency corresponding to a serving cell where the terminal is located.

In the above embodiments, in a case that the reselection priority of the first frequency is higher than the reselection priority of the second frequency corresponding to the serving cell where the terminal is located, and the area information associated with the first frequency is configured by the network device, the terminal determines that the terminal is within the area determined based on the area information, and the terminal measures the first frequency for reselecting to the cell corresponding to the first frequency. Accordingly, it may not only ensure reselection to the cell corresponding to the first frequency in a timely manner, but also ensure that the reselected cell corresponds to the first frequency with a higher reselection priority. If the terminal determines that the terminal is not within the area determined based on the area information, since it is difficult to reselect to the cell corresponding to the first frequency, the terminal still determines not to measure the first frequency to avoid unnecessary measurement, which is beneficial for saving power consumption of the terminal. In a case that the reselection priority of the first frequency is higher than the reselection priority of the second frequency corresponding to the serving cell where the terminal is located, and the area information associated with the first frequency is not configured by the network device, the terminal cannot determine whether the terminal may reselect to the cell corresponding to the first frequency, and the terminal still needs to measure the first frequency for reselecting to the cell corresponding to the first frequency with a higher reselection priority in a timely manner.

In combination with some embodiments of the first aspect, in some embodiments, a reselection priority of the first frequency is lower than or equal to a reselection priority of a second frequency corresponding to a serving cell where the terminal is located, and the serving cell where the terminal is located does not fulfill a first condition.

In the above embodiments, in a case that the reselection priority of the first frequency is lower than or equal to the reselection priority of the second frequency corresponding to the serving cell where the terminal is located, the area information associated with the first frequency is configured by the network device, and the serving cell where the terminal is located does not fulfill the first condition, the terminal determines that the terminal is within the area determined based on the area information, and the terminal then reselects to the cell corresponding to the first frequency. Accordingly, since the serving cell where the terminal is located no longer fulfills the first condition, the communication quality of the terminal in the serving cell is poor. Thus, even though the reselection priority of the first frequency is lower than or equal to the reselection priority of the second frequency corresponding to the serving cell where the terminal is located, it is still necessary to measure the first frequency for reselecting to the cell corresponding to the first frequency, to ensure that the terminal may communicate in the cell corresponding to the first frequency with better communication quality, in which the cell corresponding to the first frequency may fulfill the first condition. If the terminal determines that the terminal is not within the area determined based on the area information, since it is difficult to reselect to the cell corresponding to the first frequency, the terminal still determines not to measure the first frequency to avoid unnecessary measurement, which is beneficial for saving power consumption of the terminal. In a case that the reselection priority of the first frequency is higher than the reselection priority of the second frequency corresponding to the serving cell where the terminal is located, and the area information associated with the first frequency is not configured by the network device, and the serving cell where the terminal is located does not fulfill the first condition, the terminal cannot determine whether the terminal may reselect to a cell corresponding to the first frequency, and the terminal still needs to measure the first frequency, which ensures that the terminal may reselect to the cell corresponding to the first frequency, and communicate in the cell corresponding to the first frequency with better communication quality.

In combination with some embodiments of the first aspect, in some embodiments, a reselection priority of the first frequency is lower than or equal to a reselection priority of a second frequency corresponding to a serving cell where the terminal is located, and the serving cell where the terminal is located fulfills a first condition; a reference location and a distance threshold for the serving cell are configured by the network device, and a distance from a location of the terminal to the reference location of the serving cell is greater than the distance threshold.

In the above embodiments, in a case that the reselection priority of the first frequency is higher than the reselection priority of the second frequency corresponding to the serving cell where the terminal is located, the serving cell where the terminal is located fulfills the first condition, the area information associated with the first frequency is configured by the network device, and the distance from the location of the terminal to the reference location of the serving cell is greater than the distance threshold, the terminal determines that the terminal is within the area determined based on the area information, and the terminal then reselects to the cell corresponding to the first frequency. Accordingly, since the distance from the location of the terminal to the reference location of the serving cell is greater than the distance threshold, that is, the terminal is located outside the serving cell, even though the serving cell where the terminal is located fulfills the first condition, the communication quality of the terminal in the serving cell is still poor. Thus, even though the reselection priority of the first frequency is lower than or equal to the reselection priority of the second frequency corresponding to the serving cell where the terminal is located, it is still necessary to measure the first frequency for reselecting to the cell corresponding to the first frequency, to ensure that the terminal may communicate in the cell corresponding to the first frequency with better communication quality, in which the cell corresponding to the first frequency may fulfill the first condition. If the terminal determines that the terminal is not within the area determined based on the area information, since it is difficult to reselect to the cell corresponding to the first frequency, the terminal still determines not to measure the first frequency to avoid unnecessary measurement, which is beneficial for saving power consumption of the terminal. In a case that the reselection priority of the first frequency is higher than the reselection priority of the second frequency corresponding to the serving cell where the terminal is located, the serving cell where the terminal is located fulfills the first condition, the area information associated with the first frequency is not configured by the network device, and the serving cell where the terminal is located does not fulfill the first condition, the terminal cannot determine whether the terminal may reselect to the cell corresponding to the first frequency, and the terminal still needs to measure the first frequency, which ensures that the terminal may reselect to the cell corresponding to the first frequency, and communicates in the cell corresponding to the first frequency with better communication quality.

In combination with some embodiments of the first aspect, in some embodiments, the first condition includes: a cell selection level being higher than an inter-frequency reception level threshold.

In combination with some embodiments of the first aspect, in some embodiments, the first condition includes: a cell selection quality being higher than an inter-frequency quality threshold.

In combination with some embodiments of the first aspect, in some embodiments, determining, based on whether the area information associated with the first frequency is configured by the network device, whether to measure the first frequency includes: in a case that a service time and the area information associated with the first frequency are configured by the network device, and the terminal is within an area, determining to measure the first frequency before the service time.

In the above embodiments, in a case that the service time is configured for the terminal by the network device, and the area information associated with the first frequency is configured by the network device, and the terminal determines that the terminal is within the area determined based on the area information, the terminal may measure the first frequency before the service time, so that the terminal may reselect to the cell corresponding to the first frequency at or before the service time, to ensure that the terminal may continue communication in the cell corresponding to the first frequency after the service time. If the terminal determines that the terminal is not within the area determined based on the area information, since it is difficult to reselect to the cell corresponding to the first frequency, the terminal determines not to measure the first frequency to avoid unnecessary measurement, which is beneficial for saving power consumption of the terminal. In a case that the service time is configured for the terminal by the network device, the area information associated with the first frequency is not configured by the network device, and the serving cell where the terminal is located does not fulfill the first condition, the terminal cannot determine whether the terminal may reselect to the cell corresponding to the first frequency, and the terminal still needs to measure the first frequency, so that the terminal may reselect to the cell corresponding to the first frequency at or before the service time, to ensure that the terminal may continue communication in the cell corresponding to the first frequency after the service time.

In combination with some embodiments of the first aspect, in some embodiments, determining, based on whether the area information associated with the first frequency is configured by the network device, whether to measure the first frequency includes: in a case that a service time and the area information associated with the first frequency are configured by the network device, and the terminal is not within an area, determining not to measure the first frequency before the service time.

In combination with some embodiments of the first aspect, in some embodiments, determining, based on whether the area information associated with the first frequency is configured by the network device, whether to measure the first frequency includes: in a case that a service time is configured by the network device, and the area information associated with the first frequency is not configured by the network device, determining to measure the first frequency before the service time.

In combination with some embodiments of the first aspect, in some embodiments, determining, based on whether the area information associated with the first frequency is configured by the network device, whether to measure the first frequency includes: in a case that the area information associated with the first frequency is configured by the network device, and the terminal fulfills a first criterion, determining not to measure the first frequency, in which the first criterion includes the terminal not being within an area.

In combination with some embodiments of the first aspect, in some embodiments, a frequency of the serving cell where the terminal is located is a new radio (NR) frequency, and the first frequency includes: an NR frequency.

In combination with some embodiments of the first aspect, in some embodiments, a frequency of the serving cell where the terminal is located is an NR frequency, and the first frequency includes: a frequency of a radio access technology other than NR.

In combination with some embodiments of the first aspect, in some embodiments, a relationship between the serving cell where the terminal is located and the area includes: the serving cell being a serving cell in a non-terrestrial network, and the area being an area in a non-terrestrial network.

In combination with some embodiments of the first aspect, in some embodiments, a relationship between the serving cell where the terminal is located and the area includes: the serving cell being a serving cell in a non-terrestrial network, and the area being an area in a terrestrial network.

In combination with some embodiments of the first aspect, in some embodiments, a relationship between the serving cell where the terminal is located and the area includes: the serving cell being a serving cell in a terrestrial network, and the area being an area in a terrestrial network.

In combination with some embodiments of the first aspect, in some embodiments, a relationship between the serving cell where the terminal is located and the area includes: the serving cell being a serving cell in a terrestrial network, and the area being an area in a non-terrestrial network.

In combination with some embodiments of the first aspect, in some embodiments, the method for measurement determination further includes: in a case that the first frequency is associated with information of at least one area in received system information, determining that the area information associated with the first frequency is configured by the network device.

In combination with some embodiments of the first aspect, in some embodiments, the method for measurement determination further includes: in a case that information of at least one area is associated with the first frequency in received system information, determining that the area information associated with the first frequency is configured by the network device.

In combination with some embodiments of the first aspect, in some embodiments, the method for measurement determination further includes: in a case that a distance from a location of the terminal to a reference location of the area is less than or equal to a distance threshold of the area, determining that the terminal is within the area.

In combination with some embodiments of the first aspect, in some embodiments, the method for measurement determination further includes: in a case that a distance from a location of the terminal to a reference location of the area is greater than a distance threshold of the area, determining that the terminal is not within the area.

In a second aspect, embodiments of the disclosure provide a method for measurement determination. The method is performed by a network device, including: communicating with the terminal performing the above method for measurement determination.

In combination with some embodiments of the second aspect, in some embodiments, the method further includes: sending area information associated with a first frequency to the terminal, in which the area information includes a reference location and a distance threshold.

In the above embodiments, in a case that the area information associated with the first frequency is configured by the network device, the terminal may determine whether the terminal is within an area determined based on the area information. If the terminal is within the area determined based on the area information, then the terminal may reselect to a cell corresponding to the first frequency, and may determine to measure the first frequency for reselecting to the cell corresponding to the first frequency in a timely manner. If the terminal is not within the area determined based on the area information, then it is difficult for the terminal to reselect to the cell corresponding to the first frequency, and the terminal may determine not to measure the first frequency, to avoid unnecessary measurement and save power consumption of the terminal. If the area information associated with the first frequency is not configured by the network device, then the terminal cannot determine whether the terminal may reselect to the cell corresponding to the first frequency, and the terminal still needs to measure the first frequency for reselecting to the cell corresponding to the first frequency in a timely manner. The area information includes the reference location and the distance threshold. The terminal may determine a location of the terminal, and determine whether the terminal is within the area determined based on the area information, based on a relationship between a distance from the location of the terminal to the reference location and the distance threshold. For example, when the distance from the location of the terminal to the reference location of the area is less than or equal to the distance threshold of the area, it may be determined that the terminal is within the area determined based on the area information; when the distance from the location of the terminal to the reference location of the area is greater than the distance threshold of the area, it is determined that the terminal is not within the area determined based on the area information.

In combination with some embodiments of the second aspect, in some embodiments, a frequency of the serving cell where the terminal is located is an NR frequency, and the first frequency includes: an NR frequency.

In combination with some embodiments of the second aspect, in some embodiments, a frequency of the serving cell where the terminal is located is an NR frequency, and the first frequency includes: a frequency of a radio access technology other than NR.

In combination with some embodiments of the second aspect, in some embodiments, a relationship between the serving cell where the terminal is located and the area includes: the serving cell being a serving cell in a non-terrestrial network, and the area being an area in a non-terrestrial network.

In combination with some embodiments of the second aspect, in some embodiments, a relationship between the serving cell where the terminal is located and the area includes: the serving cell being a serving cell in a non-terrestrial network, and the area being an area in a terrestrial network.

In combination with some embodiments of the second aspect, in some embodiments, a relationship between the serving cell where the terminal is located and the area includes: the serving cell being a serving cell in a terrestrial network, and the area being an area in a terrestrial network.

In combination with some embodiments of the second aspect, in some embodiments, a relationship between the serving cell where the terminal is located and the area includes: the serving cell being a serving cell in a terrestrial network, and the area being an area in a non-terrestrial network.

In combination with some embodiments of the second aspect, in some embodiments, sending the area information associated with the first frequency to the terminal includes: sending system information to the terminal, in which the first frequency is associated with information of at least one area in the system information.

In combination with some embodiments of the second aspect, in some embodiments, sending the area information associated with the first frequency to the terminal includes: sending system information to the terminal, in which information of at least one area is associated with the first frequency in the system information.

In a third aspect, embodiments of the disclosure provide an apparatus for measurement determination. The apparatus includes: a processing module, configured to determine, based on whether area information associated with a first frequency is configured by a network device, whether to measure the first frequency.

In a fourth aspect, embodiments of the disclosure provide an apparatus for measurement determination. The apparatus includes: a communicating module, configured to communicate with the terminal performing the above method for measurement determination.

In a fifth aspect, embodiments of the disclosure provide a communication device. The communication device includes: one or more processors and one or more memories storing instructions. The processor is configured to call the instructions and cause the communication device to implement the method for measurement determination in the first aspect, the method for measurement determination in the second aspect, and the methods for measurement determination in optional implementations of the first aspect or the second aspect.

In a sixth aspect, embodiments of the disclosure provide a communication system. The communication system includes: a terminal configured to perform the method for measurement determination in the first aspect, the method for measurement determination in the second aspect, and the methods for measurement determination in optional implementations of the first aspect or the second aspect, a network device configured to perform the method for measurement determination in the first aspect, the method for measurement determination in the second aspect, and the methods for measurement determination in optional implementations of the first aspect or the second aspect, and a core network device.

In a seventh aspect, embodiments of the disclosure provide a storage medium. The storage medium stores instructions that, when executed on a communication device, cause the communication device to implement the method for measurement determination in the first aspect, the method for measurement determination in the second aspect, and the methods for measurement determination in optional implementations of the first aspect or the second aspect.

In an eighth aspect, the embodiments of the disclosure provide a program product. When the program product is executed by a communication device, the communication device is caused to implement the methods for measurement determination in the first aspect and optional implementations of the first aspect, or the methods for measurement determination in the second aspect and optional implementations of the second aspect.

In a ninth aspect, the embodiments of the disclosure provide a computer program. When the computer program is running on a computer, the computer is caused to implement the methods for measurement determination in the first aspect and optional implementations of the first aspect, or the methods for measurement determination in the second aspect and optional implementations of the second aspect.

It may be understood that apparatus for measurement determination, the communication device, the communication system, the storage medium, the program product, and the computer program are all used to implement the method in the embodiments of the disclosure. Therefore, regarding beneficial effects they may achieve, reference may made be to the beneficial effects in the corresponding methods, which is not repeated here.

The embodiments of the disclosure provide a method and an apparatus for measurement determination, a communication device, and a storage medium. In some embodiments, terms such as "method for measurement determination", "method for information processing" and "communication method" may be used interchangeably, terms such as "apparatus for measurement determination", "apparatus for information processing", and "communication apparatus" may be used interchangeably, and terms such as "information processing system" and "communication system" may be used interchangeably.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc.

For example, when using articles such as "a", "an", "the" in English translation, the noun after the article may be understood as a singular expression or a plural expression.

In the embodiments of the disclosure, "a plurality of' refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which the communication between the access network device, the core network device, or the network device and the terminal is replaced by the communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the consent from users.

In addition, each element, each row, or each column in the table of the embodiments of the disclosure may be implemented as an independent embodiment, and the combination of any elements, any rows, or any columns may also be implemented as an independent embodiment.

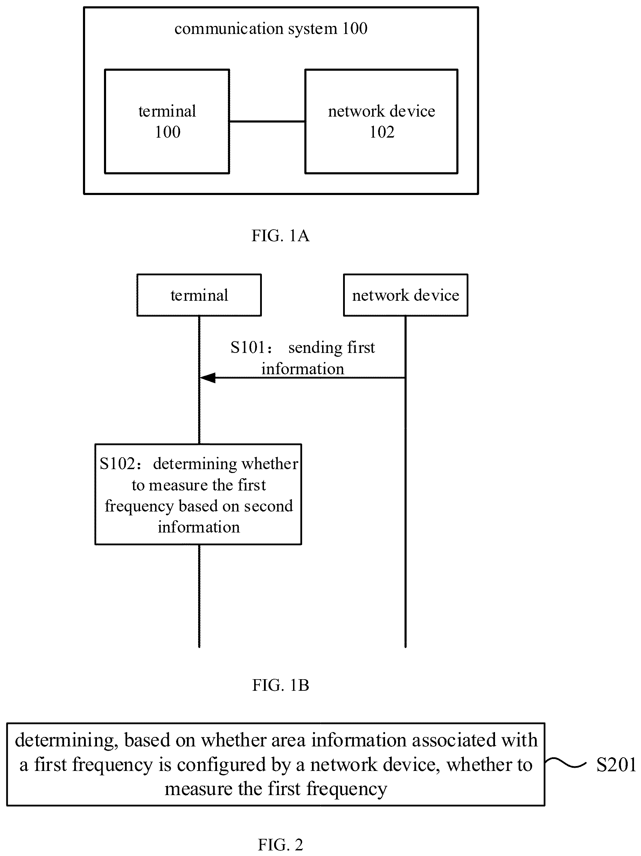

FIG. 1A is a schematic diagram illustrating an architecture of a communication system according to an embodiment of the disclosure.

As shown in FIG. 1A, the communication system 100 may include a terminal 101 and a network device 102.

In some embodiments, the network device includes at least one of: an access network device, or a core network device.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in the embodiments of the disclosure may become internal interfaces of the Open RAN, and the procedures and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

It may be understood that the communication system described in the embodiments of the disclosure aims to more clearly illustrate the technical solution of the embodiments of the disclosure, and does not constitute a limitation on the technical solution proposed in the embodiments of the disclosure. A person skilled in the art may know that with the evolution of the system architecture and the emergence of new service scenarios, the technical solution proposed in the embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, when a terminal is located in a cell in a non-terrestrial network (NTN), the terminal may perform cell reselection to reselect to a cell in a terrestrial network (TN). To reselect to a cell in the TN, it is necessary to perform measurement on TN cells.

However, in some cases, if no TN is available near the terminal, and the terminal still needs to measure cells in the TN, power consumption of the terminal may be wasted.

FIG. 1B is an interaction diagram illustrating a method for measurement determination according to an embodiment of the disclosure.

As shown in FIG. 1B, the method for measurement determination may be applied to a communication system, and the method for measurement determination may include the following steps S101 to S102.

At step S101, a network device sends first information to a terminal.

In some embodiments, the first information includes area information associated with a first frequency.

In some embodiments, the network device may carry the area information associated with the first frequency in system information.

In some embodiments, the system information includes a system information block 19.

In some embodiments, the network device may associate the first frequency with information of at least one area in the system information, and the terminal may accordingly determine that the area information associated with the first frequency is configured by the network device.

In some embodiments, the network device may associate information of at least one area with the first frequency in the system information, and the terminal may accordingly determine that the area information associated with the first frequency is configured by the network device.

At step S102, the terminal may determine whether to measure the first frequency based on second information.

In some embodiments, the second information may include: whether the area information associated with the first frequency is configured for the terminal by the network device.

In some embodiments, when determining whether to measure the first frequency, the terminal may consider whether the area information associated with the first frequency is configured for the terminal by the network device. In a case that the area information associated with the first frequency is configured for the terminal by the network device, the terminal determines whether the terminal is within an area determined based on the area information.

For example, when the terminal is within the area, the terminal may measure the first frequency.

For example, when the terminal is not within the area, the terminal may not measure the first frequency.

For example, if the area information associated with the first frequency is not configured for the terminal by the network device, the terminal may measure the first frequency.

In some embodiments, when determining whether to measure the first frequency, in addition to considering whether the area information associated with the first frequency is configured by the network device, the terminal may further consider a relationship between a reselection priority of the first frequency and a reselection priority of a second frequency corresponding to a serving cell where the terminal is located.

For example, in a case that the reselection priority of the first frequency is higher than the reselection priority of the second frequency corresponding to the serving cell where the terminal is located, and the area information associated with the first frequency is configured by the network device, the terminal determines that the terminal is within the area determined based on the area information, and the terminal measures the first frequency.

For example, in a case that the reselection priority of the first frequency is higher than the reselection priority of the second frequency corresponding to the serving cell where the terminal is located, and the area information associated with the first frequency is configured by the network device, the terminal determines that the terminal is not within the area determined based on the area information, and the terminal does not measure the first frequency.

For example, in a case that the reselection priority of the first frequency is higher than the reselection priority of the second frequency corresponding to the serving cell where the terminal is located, and the area information associated with the first frequency is not configured by the network device, the terminal measures the first frequency.

In some embodiments, when determining whether to measure the first frequency, in addition to considering whether the area information associated with the first frequency is configured by the network device, the terminal may further consider a relationship between a reselection priority of the first frequency and a reselection priority of a second frequency corresponding to a serving cell where the terminal is located, and whether the serving cell where the terminal is located fulfills a first condition, and the terminal determines whether the terminal is within an area determined based on the area information.

For example, in a case that the reselection priority of the first frequency is lower than or equal to the reselection priority of the second frequency corresponding to the serving cell where the terminal is located, the area information associated with the first frequency is configured by the network device, and the serving cell where the terminal is located does not fulfill the first condition, the terminal determines that the terminal is within the area determined based on the area information, and the terminal measures the first frequency.

For example, in a case that the reselection priority of the first frequency is lower than or equal to the reselection priority of the second frequency corresponding to the serving cell where the terminal is located, the area information associated with the first frequency is configured by the network device, and the serving cell where the terminal is located does not fulfill the first condition, the terminal determines that the terminal is not within the area determined based on the area information, and the terminal does not measure the first frequency.

For example, in a case that the reselection priority of the first frequency is lower than or equal to the reselection priority of the second frequency corresponding to the serving cell where the terminal is located, and the area information associated with the first frequency is not configured by the network device, the terminal may measure the first frequency.

In some embodiments, when determining whether to measure the first frequency, in addition to considering whether the area information associated with the first frequency is configured by the network device, the terminal may further consider a relationship between a reselection priority of the first frequency and a reselection priority of a second frequency corresponding to a serving cell where the terminal is located, and a distance from a location of the terminal to a reference location of the serving cell.

For example, in a case that the reselection priority of the first frequency is lower than or equal to the reselection priority of the second frequency corresponding to the serving cell where the terminal is located, the serving cell where the terminal is located fulfills a first condition, the area information associated with the first frequency is configured by the network device, the distance from the location of the terminal to the reference location of the serving cell is greater than a distance threshold, and the terminal determines that the terminal is within the area determined based on the area information, the terminal measures the first frequency.

For example, in a case that the reselection priority of the first frequency is lower than or equal to the reselection priority of the second frequency corresponding to the serving cell where the terminal is located, the serving cell where the terminal is located fulfills a first condition, the area information associated with the first frequency is configured by the network device, and the distance from the location of the terminal to the reference location of the serving cell is greater than a distance threshold, the terminal determines that the terminal is not within the area determined based on the area information, and the terminal does not measure the first frequency.

For example, in a case that the reselection priority of the first frequency is lower than or equal to the reselection priority of the second frequency corresponding to the serving cell where the terminal is located, the serving cell where the terminal is located fulfills a first condition, the area information associated with the first frequency is not configured by the network device, and the serving cell where the terminal is located does not fulfill the first condition, the terminal measures the first frequency.

In some embodiments, when determining whether to measure the first frequency, in addition to considering whether the area information associated with the first frequency is configured by the network device, the terminal may further consider whether a service time is configured by the network device.

For example, in a case that the service time is configured for the terminal by the network device, and the area information associated with the first frequency is configured by the network device, the terminal determines that the terminal is within the area determined based on the area information, and the terminal may measure the first frequency before the service time.

For example, in a case that the service time is configured for the terminal by the network device, and the area information associated with the first frequency is configured by the network device, and the terminal determines that the terminal is not within the area determined based on the area information, the terminal does not measure the first frequency before and/or after the service time.

For example, in a case that the service time is configured for the terminal by the network device, the area information associated with the first frequency is not configured by the network device, and the serving cell where the terminal is located does not fulfill the first condition, the terminal measures the first frequency.

In some embodiments, when determining whether to measure the first frequency, the terminal considers whether a first criterion is fulfilled. If the first criterion is fulfilled, then the terminal does not measure the first frequency.

For example, the first criterion is that the area information associated with the first frequency is configured by the network device, and the terminal is not within the area determined based on the area information.

The communication method in the embodiments of the disclosure may include at least one of step S101 to step S102. For example, step S101 may be implemented as an independent embodiment, step S102 may be implemented as an independent embodiment, step S101 and step S102 may be implemented as an independent embodiment, which is not limited herein.

In some embodiments, step S101 and step S102 may be performed in a an alternative order or simultaneously.

In some embodiments, step S101 is optional, and one or more of the steps may be omitted or substituted in different embodiments.

In some embodiments, step S102 is optional, and one or more of the steps may be omitted or substituted in different embodiments.

For specific embodiments related to the terminal and the network device in the embodiment shown in FIG. 1B, reference may be made to the following embodiments, which are not repeated in the disclosure.

In a first aspect, embodiments of the disclosure provide a method for measurement determination. FIG. 2 is a flowchart illustrating a method for measurement determination according to an embodiment of the disclosure. The method for measurement determination shown in the embodiment may be performed by a terminal. The terminal may communicate with a network device. For specific examples of the terminal and the network device, reference may be made to FIG. 1A, which is not repeated here.

As shown in FIG. 2, the method for measurement determination may include the following step S201.

At step S201, whether to measure the first frequency is determined based on whether area information associated with a first frequency is configured by a network device.

According to embodiments of the disclosure, the terminal may determine, based on whether the area information associated with the first frequency is configured by the network device of a cell where the terminal is located, whether to measure the first frequency.

For example, in a case that the area information associated with the first frequency is configured by the network device, the terminal may determine whether the terminal is within an area determined based on the area information. If the terminal is within the area determined based on the area information, then the terminal may reselect to a cell corresponding to the first frequency, and may determine to measure the first frequency for reselecting to the cell corresponding to the first frequency in a timely manner. If the terminal is not within the area determined based on the area information, then it is difficult for the terminal to reselect to the cell corresponding to the first frequency, and the terminal may determine not to measure the first frequency, to avoid unnecessary measurement and save power consumption of the terminal. If the area information associated with the first frequency is not configured by the network device, then the terminal cannot determine whether the terminal may reselect to the cell corresponding to the first frequency, and the terminal still needs to measure the first frequency for reselecting to the cell corresponding to the first frequency in a timely manner.

In some embodiments, a frequency of the serving cell where the terminal is located is an NR frequency, and the first frequency includes at least one of: an NR frequency; or a frequency of an RAT other than NR. The RAT other than NR includes, but is not limited to, LTE and wireless local area network (WLAN).

When the frequency of the serving cell where the terminal is located is the NR frequency, and the first frequency is also the NR frequency, the frequency of the serving cell where the terminal is located and the first frequency may be different, and the first frequency may be an NR inter-frequency relative to the frequency of the serving cell where the terminal is located.

When the frequency of the serving cell where the terminal is located is the NR frequency, and the first frequency is not the NR frequency, then the first frequency may be an inter-RAT frequency relative to the frequency of the serving cell where the terminal is located.

In some embodiments, a relationship between the serving cell where the terminal is located and the area includes at least one of:
the serving cell being a serving cell in a NTN, and the area being an area in a NTN;
the serving cell being a serving cell in a NTN, and the area being an area in a TN;
the serving cell being a serving cell in a TN, and the area being an area in a TN; or
the serving cell being a serving cell in a TN, and the area being an area in a NTN.

Taking an example where the serving cell where the terminal is located is the NTN cell, and the cell corresponding to the first frequency is the TN cell. When the terminal performs cell reselection in the NTN cell, the terminal may determine whether TN area information associated with the first frequency is configured by the network device of the NTN cell for the terminal.

If the TN area information associated with the first frequency is configured by the network device of the NTN cell, the terminal may determine whether the terminal is within the TN area associated with the first frequency. If the terminal is not within the TN area associated with the first frequency, then it is difficult for the terminal to reselect to a TN cell of the first frequency, and the terminal may determine not to measure the first frequency, to avoid unnecessary measurement and save power consumption of the terminal.

It needs to be noted that the several scenarios (where the terminal determines, based on whether the area information associated with the first frequency is configured by the network device, whether to measure the first frequency) described in the above embodiments are only a part of examples. Determining by the terminal whether to measure the first frequency based on whether the area information associated with the first frequency is configured by the network device may also include other scenarios. For example, when determining whether to measure the first frequency, the terminal may consider other factors in addition to whether the area information associated with the first frequency is configured by the network device, which is explained in subsequent embodiments of the disclosure.

In some embodiments, determining, based on whether the area information associated with the first frequency is configured by the network device, whether to measure the first frequency includes at least one of: in a case that the area information associated with the first frequency is configured by the network device, and the terminal is within an area, determining to measure the first frequency; in a case that the area information associated with the first frequency is configured by the network device, and the terminal is not within an area, determining not to measure the first frequency; or in a case that the area information associated with the first frequency is not configured by the network device, determining to measure the first frequency.

In a case that the terminal determines that the area information associated with the first frequency is configured by the network device, the terminal may further determine whether the terminal is within the area.

If the terminal is within the area, then the terminal may reselect to a cell corresponding to the first frequency within the area, and may determine to measure the first frequency for reselecting to the cell corresponding to the first frequency in a timely manner.

If the terminal is not within the area, then it is difficult for the terminal to reselect to a cell corresponding to the first frequency within the area, and the terminal may determine not to measure the first frequency, to avoid unnecessary measurement and save power consumption of the terminal.

If the area information associated with the first frequency is not configured by the network device, then the terminal cannot determine whether the terminal may reselect to a cell corresponding to the first frequency, and the terminal still needs to measure the first frequency for reselecting to the cell corresponding to the first frequency in a timely manner.

The following embodiments provides exemplary descriptions regarding how the terminal determines whether the terminal is within the area determined based on the area information.

In some embodiments, the method for measurement determination further includes at least one of: in a case that a distance from a location of the terminal to a reference location of the area is less than or equal to a distance threshold of the area, determining that the terminal is within the area; or in a case that a distance from a location of the terminal to a reference location of the area is greater than a distance threshold of the area, determining that the terminal is not within the area.

The network device may configure, for the terminal, a reference location and a distance threshold of an area associated with the first frequency. The reference location may also be called a reference point, for example, an ellipsoid-point. The distance threshold may also be called a radius.

The terminal may determine a location of the terminal, and determine whether the terminal is within the area associated with the first frequency based on a relationship between the distance from the location of the terminal to the reference location of the area, and the distance threshold. For example, when the distance from the location of the terminal to the reference location of the area is less than or equal to the distance threshold of the area, it may be determined that the terminal is within the area; when the distance from the location of the terminal to the reference location of the area is greater than the distance threshold of the area, it is determined that the terminal is not within the area.

It needs to be noted that the manner of determining by the terminal whether the terminal is within the area determined based on the area information is not limited to the above embodiments. The specific manner may be set and selected as needed, and the disclosure does not impose limitations. For example, the terminal may determine based on its own coordinates that the terminal is within the area determined based on the area information.

In some embodiments, a reselection priority of the first frequency is higher than a reselection priority of a second frequency corresponding to a serving cell where the terminal is located. It needs to be noted that the embodiments may also be applicable to a case where the reselection priority of the first frequency is equal to the reselection priority of the second frequency corresponding to the serving cell where the terminal is located.

When determining whether to measure the first frequency, in addition to considering whether the area information associated with the first frequency is configured by the network device, the terminal may further consider a relationship between a reselection priority of the first frequency and a reselection priority of a second frequency corresponding to a serving cell where the terminal is located.

For example, in a case that the reselection priority of the first frequency is higher than the reselection priority of the second frequency corresponding to the serving cell where the terminal is located, and the area information associated with the first frequency is configured by the network device, the terminal determines that the terminal is within the area determined based on the area information, and the terminal measures the first frequency for reselecting to the cell corresponding to the first frequency. Accordingly, it may not only ensure reselection to the cell corresponding to the first frequency in a timely manner, but also ensure reselection to a cell with a higher frequency priority. If the terminal determines that the terminal is not within the area determined based on the area information, since it is difficult to reselect to the cell corresponding to the first frequency, the terminal still determines not to measure the first frequency to avoid unnecessary measurement, which is beneficial for saving power consumption of the terminal.

In a case that the reselection priority of the first frequency is higher than the reselection priority of the second frequency corresponding to the serving cell where the terminal is located, and the area information associated with the first frequency is not configured by the network device, the terminal cannot determine whether the terminal may reselect to a cell corresponding to the first frequency, and the terminal still needs to measure the first frequency for reselecting to the cell corresponding to the first frequency with a higher reselection priority in a timely manner.

In some embodiments, for the first frequency (e.g., another NR frequency or a frequency of another RAT), when the reselection priority of the first frequency is higher than the reselection priority of a second frequency (e.g., an NR frequency) of a current serving cell where the terminal is located, reference may be made to the following embodiments.

If the area information associated with the first frequency is configured by the network device for the terminal, and the terminal is not within the area, the terminal does not measure the first frequency; if the terminal is within the area, the terminal measures the first frequency.

If the area information associated with the first frequency is not configured by the network device for the terminal, the terminal measures the first frequency.

In some embodiments, the reselection priority of the first frequency is lower than or equal to the reselection priority of the second frequency corresponding to the serving cell where the terminal is located, and the serving cell where the terminal is located does not fulfill a first condition.

When determining whether to measure the first frequency, in addition to considering whether the area information associated with the first frequency is configured by the network device, the terminal may further consider a relationship between the reselection priority of the first frequency and the reselection priority of the second frequency corresponding to the serving cell where the terminal is located, and whether the serving cell where the terminal is located fulfills the first condition. Then, the terminal determines whether the terminal is within the area determined based on the area information.

For example, in a case that the reselection priority of the first frequency is lower than or equal to the reselection priority of the second frequency corresponding to the serving cell where the terminal is located, the area information associated with the first frequency is configured by the network device, and the serving cell where the terminal is located does not fulfill the first condition, the terminal determines that the terminal is within the area determined based on the area information, and the terminal measures the first frequency. Accordingly, since the serving cell where the terminal is located no longer fulfills the first condition, the communication quality of the terminal in the serving cell is poor. Thus, even though the reselection priority of the first frequency is lower than or equal to the reselection priority of the second frequency corresponding to the serving cell where the terminal is located, it is still necessary to measure the first frequency for reselecting to the cell corresponding to the first frequency, to ensure that the terminal may communicate in the cell corresponding to the first frequency with better communication quality. If the terminal determines that the terminal is not within the area determined based on the area information, since it is difficult to reselect to the cell corresponding to the first frequency, the terminal still determines not to measure the first frequency to avoid unnecessary measurement, which is beneficial for saving power consumption of the terminal.

In a case that the reselection priority of the first frequency is lower than or equal to the reselection priority of the second frequency corresponding to the serving cell where the terminal is located, and the area information associated with the first frequency is not configured by the network device, the terminal cannot determine whether the terminal may reselect to a cell corresponding to the first frequency, and the terminal still needs to measure the first frequency, which ensures that the terminal may reselect to the cell corresponding to the first frequency, and communicate in the cell corresponding to the first frequency.

In some embodiments, for the first frequency (e.g., another NR frequency or a frequency of another RAT), when the reselection priority of the first frequency is lower than or equal to the reselection priority of a second frequency (e.g., an NR frequency) of a current serving cell where the terminal is located, and the current serving cell where the terminal is located does not fulfill a first condition (Srxlev > S_{nonIntraSearchP} and/or Squal > S_{nonIntraSearchQ}), reference may be made to the following embodiments.

If the area information associated with the first frequency is configured by the network device for the terminal, and the terminal is not within the area, the terminal does not measure the first frequency; if the terminal is within the area, the terminal measures the first frequency.

If the area information associated with the first frequency is not configured by the network device for the terminal, the terminal measures the first frequency.

In some embodiments, the reselection priority of the first frequency is lower than or equal to the reselection priority of the second frequency corresponding to the serving cell where the terminal is located, and the serving cell where the terminal is located fulfills the first condition; the reference location and the distance threshold for the serving cell are configured by the network device, and the distance from the location of the terminal to the reference location of the serving cell is greater than the distance threshold.

When determining whether to measure the first frequency, in addition to considering whether the area information associated with the first frequency is configured by the network device, the terminal may further consider a relationship between a reselection priority of the first frequency and a reselection priority of a second frequency corresponding to a serving cell where the terminal is located, and a distance from a location of the terminal to a reference location of the serving cell.

For example, in a case that the reselection priority of the first frequency is lower than or equal to the reselection priority of the second frequency corresponding to the serving cell where the terminal is located, the serving cell where the terminal is located fulfills a first condition, the area information associated with the first frequency is configured by the network device, the distance from the location of the terminal to the reference location of the serving cell is greater than a distance threshold, and the terminal determines that the terminal is within the area determined based on the area information, the terminal measures the first frequency. Accordingly, since the distance from the location of the terminal to the reference location of the serving cell is greater than the distance threshold, even though the serving cell where the terminal is located fulfills the first condition, the serving cell is unable to provide service for the terminal. Thus, even though the reselection priority of the first frequency is lower than or equal to the reselection priority of the second frequency corresponding to the serving cell where the terminal is located, it is still necessary to measure the first frequency, so that it is possible to reselect to the cell corresponding to the first frequency, and ensure that the terminal may communicate in the cell corresponding to the first frequency with better communication quality. If the terminal determines that the terminal is not within the area determined according to the area information, since it is difficult to reselect to the cell corresponding to the first frequency, the terminal still determines not to measure the first frequency to avoid unnecessary measurement, which is beneficial for saving power consumption of the terminal.

In a case that the reselection priority of the first frequency is lower than or equal to the reselection priority of the second frequency corresponding to the serving cell where the terminal is located, and the serving cell where the terminal is located fulfills the first condition, and the area information associated with the first frequency is not configured by the network device, the terminal cannot determine whether the terminal may reselect to a cell corresponding to the first frequency, and the terminal still needs to measure the first frequency, which ensures that the terminal may reselect to the cell corresponding to the first frequency, and communicate in the cell corresponding to the first frequency with better communication quality.

In some embodiments, for the first frequency (e.g., another NR frequency or a frequency of another RAT), when the reselection priority of the first frequency is lower than or equal to the reselection priority of a second frequency (e.g., an NR frequency) of a current serving cell where the terminal is located, and the current serving cell where the terminal is located fulfills a first condition (Srxlev > S_{nonIntraSearchP} and/or Squal > S_{nonIntraSearchQ}), and the network device broadcasts the reference location and the distance threshold for the serving cell in system information, and a distance from the terminal to the reference location of the serving cell is greater than the distance threshold, reference may be made to the following embodiments.

If the area information associated with the first frequency is configured by the network device for the terminal, and the terminal is not within the area, the terminal does not measure the first frequency; if the terminal is within the area, the terminal measures the first frequency.

If the area information associated with the first frequency is not configured by the network device for the terminal, the terminal measures the first frequency.

In some embodiments, the reference location and the distance threshold for the serving cell may be configured by the network device for the terminal via system information, for example, via a system information block (SIB), specifically, for example, via SIB19.

In some embodiments, the first condition includes at least one of:
a cell selection level (Srxlev) being higher than an inter-frequency level threshold (S_{nonIntraSearchP}); or
a cell selection quality (Squal) being higher than an inter-frequency quality threshold (S_{nonIntraSearchQ}).

When the serving cell fulfills the first condition, and the terminal is still within the serving cell, the communication quality of the terminal in the serving cell is relatively good. When the serving cell does not fulfill the first condition, even if the terminal is within the serving cell, the communication quality of the terminal in the serving cell is relatively poor.

In some embodiments, determining, based on whether the area information associated with the first frequency is configured by the network device, whether to measure the first frequency includes at least one of: in a case that a service time and the area information associated with the first frequency are configured by the network device, and the terminal is within an area, determining to measure the first frequency before the service time; in a case that a service time and the area information associated with the first frequency are configured by the network device, and the terminal is not within an area, determining not to measure the first frequency before the service time; or in a case that a service time is configured by the network device, and the area information associated with the first frequency is not configured, determining to measure the first frequency before the service time. The service time is t-service, and the serving cell stops providing service for the terminal at the service time.

When determining whether to measure the first frequency, in addition to considering whether the area information associated with the first frequency is configured by the network device, the terminal may further consider whether the service time is configured by the network device.

For example, in a case that the service time is configured for the terminal by the network device, and the area information associated with the first frequency is configured by the network device, and the terminal determines that the terminal is within the area determined based on the area information, the terminal may measure the first frequency before the service time, so that the terminal may reselect to the cell corresponding to the first frequency at or before the service time, to ensure that the terminal may continue communication in the cell corresponding to the first frequency after the service time. If the terminal determines that the terminal is not within the area determined based on the area information, since it is difficult to reselect to the cell corresponding to the first frequency, the terminal determines not to measure the first frequency to avoid unnecessary measurement, which is beneficial for saving power consumption of the terminal.

In a case that the service time is configured for the terminal by the network device, the area information associated with the first frequency is not configured by the network device, and the serving cell where the terminal is located does not fulfill the first condition, the terminal cannot determine whether the terminal may reselect to a cell corresponding to the first frequency, and the terminal still needs to measure the first frequency, so that the terminal may reselect to the cell corresponding to the first frequency at or before the service time, to ensure that the terminal may continue communication in the cell corresponding to the first frequency after the service time.

In some embodiments, when the network device broadcasts the t-service in the system information, reference may be made to the following embodiments.

If the area information associated with the first frequency is configured by the network device for the terminal, and the terminal is not within the area, the terminal does not measure the first frequency before and/or after the t-service. If the terminal is within the area, the terminal measures the first frequency before the t-service.

If the area information associated with the first frequency is not configured by the network device for the terminal, the terminal measures the first frequency before the t-service.

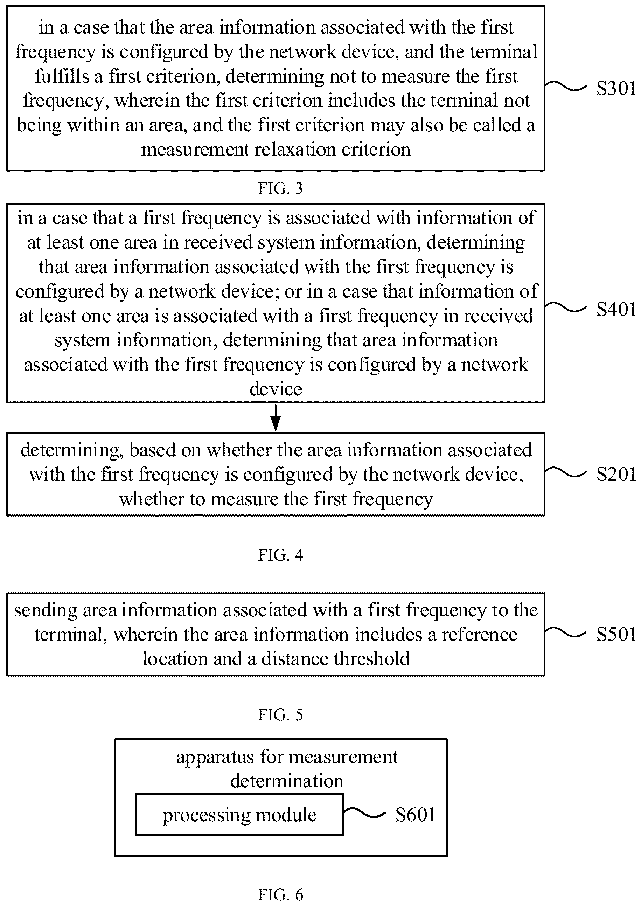

FIG. 3 is a flowchart illustrating another method for measurement determination according to an embodiment of the disclosure. The method for measurement determination may be performed by a terminal. As shown in FIG. 3, determining, based on whether the area information associated with the first frequency is configured by the network device, whether to measure the first frequency includes the following step S301.

At step S301, in a case that the area information associated with the first frequency is configured by the network device, and the terminal fulfills a first criterion, the first frequency is determined not to be measured, in which the first criterion includes the terminal not being within the area. The first criterion may also be called a measurement relaxation criterion.

It needs to be noted that embodiments shown in FIG. 3 may be implemented independently, or may be implemented in combination with at least one other embodiment in the disclosure. The specific implementation is not limited by the disclosure.

In some embodiments, when determining whether to measure the first frequency, the terminal may consider whether the first criterion is fulfilled, in which the first criterion includes the terminal not being within the area associated with the first frequency.

For example, in a case that the area information associated with the first frequency is configured by the network device, and the terminal fulfills the first criterion, and the terminal is not within the area determined based on the area information, then it is difficult for the terminal to reselect to a cell corresponding to the first frequency, and the terminal determines not to measure the first frequency to avoid unnecessary measurement, which is beneficial for saving power consumption of the terminal.

In some embodiments, when the terminal fulfills the measurement relaxation criterion, the terminal does not measure the first frequency.

For example, the measurement relaxation criterion is: the area information associated with the first frequency is configured by the network device, and the terminal is not within the area determined based on the area information.

FIG. 4 is a flowchart illustrating another method for measurement determination according to an embodiment of the disclosure. The method for measurement determination may be performed by a terminal. As shown in FIG. 4, the method for measurement determination includes at least one of the following steps S401 to S201.

At step S401, in a case that the first frequency is associated with information of at least one area in received system information, the area information associated with the first frequency configured by the network device is determined; or in a case that information of at least one area is associated with the first frequency in received system information, the area information associated with the first frequency configured by the network device is determined.

It needs to be noted that embodiments shown in FIG. 4 may be implemented independently, or may be implemented in combination with at least one other embodiment in the disclosure. The specific implementation is not limited by the disclosure.

In some embodiments, the system information sent by the network device may include frequency information and may also include area information.

For example, in a case that the system information includes the first frequency, when the terminal determines that the first frequency is associated with the information of at least one area, the terminal may determine that the area information associated with the first frequency is configured by the network device. For example, if the first frequency is fl and the area information is (reference point 1, radius 1), when the terminal determines that the fl is associated with the (reference point 1, radius 1) in the system information, the terminal may determine that the area information associated with the first frequency is configured by the network device.

For example, in a case that the system information includes the information of at least one area, when the terminal determines that the information of the at least one area is associated with the first frequency, the terminal may also determine that the area information associated with the first frequency is configured by the network device. For example, if the area information is (reference point 1, radius 1) and the first frequency is f1, when the terminal determines that the (reference point 1, radius 1) is associated with the fl in the system information, the terminal may determine that the area information associated with the first frequency is configured by the network device.

It needs to be noted that, in the system information, the first frequency may be associated with information of one area, or may be associated with information of a plurality of areas. The information of one area may be associated with one frequency, or may be associated with a plurality of frequencies.

In some embodiments, the terms "radio", "wireless", "radio access network (RAN)", "access network (AN)", "RAN-based" and the like may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" and the like may be used interchangeably.

In a second aspect, embodiments of the disclosure provide a communication method. The communication method shown in the embodiments may be performed by a network device. The network device may communicate with a terminal. For specific examples of the terminal and the network device, reference may be made to FIG. 1A, which is not repeated here.

In some embodiments, the communication method includes: communicating with the terminal performing the method for measurement determination according to any one of above embodiments.

FIG. 5 is a flowchart illustrating a communication method according to an embodiment of the disclosure. The communication method may be performed by a network device. As shown in FIG. 5, the communication method further includes the following step S501.

At step S501, area information associated with a first frequency is sent to the terminal, in which the area information includes a reference location and a distance threshold.

According to an embodiment of the disclosure, the network device may send the area information associated with the first frequency to the terminal. The terminal may determine, based on whether the area information associated with the first frequency is configured by the network device of a cell where the terminal is located, whether to measure the first frequency.

For example, in a case that the area information associated with the first frequency is configured by the network device, the terminal may determine whether the terminal is within an area determined based on the area information. If the terminal is within the area determined based on the area information, then the terminal may reselect to a cell corresponding to the first frequency, and may determine to measure the first frequency for reselecting to the cell corresponding to the first frequency in a timely manner. If the terminal is not within the area determined based on the area information, then it is difficult for the terminal to reselect to the cell corresponding to the first frequency, and the terminal may determine not to measure the first frequency, to avoid unnecessary measurement and save power consumption of the terminal. If the area information associated with the first frequency is not configured by the network device, then the terminal cannot determine whether the terminal may reselect to the cell corresponding to the first frequency, and the terminal still needs to measure the first frequency for reselecting to the cell corresponding to the first frequency in a timely manner.

The area information includes the reference location and the distance threshold. The terminal may determine a location of the terminal, and determine whether the terminal is within the area determined based on the area information, based on a relationship between a distance from the location of the terminal to the reference location and the distance threshold. For example, when the distance from the location of the terminal to the reference location of the area is less than or equal to the distance threshold of the area, it may be determined that the terminal is within the area determined based on the area information; when the distance from the location of the terminal to the reference location of the area is greater than the distance threshold of the area, it is determined that the terminal is not within the area determined based on the area information.

In some embodiments, a relationship between the serving cell where the terminal is located and the area includes at least one of:
the serving cell being a serving cell in a NTN, and the area being an area in a NTN;
the serving cell being a serving cell in a NTN, and the area being an area in a TN;
the serving cell being a serving cell in a TN, and the area being an area in a TN; or
the serving cell being a serving cell in a TN, and the area being an area in a NTN.

Taking an example where the serving cell where the terminal is located is the NTN cell, and the cell corresponding to the first frequency is the TN cell. When the terminal is in the NTN cell, the network device may send the area information associated with the first frequency to the terminal in the NTN cell. When the terminal performs cell reselection in the NTN cell, the terminal may determine whether TN area information associated with the first frequency is configured for the terminal by the network device of the NTN cell.

If the TN area information associated with the first frequency is configured by the network device of the NTN cell, the terminal may determine whether the terminal is within the area determined based on the area information. If the terminal is not within the area determined based on the area information, then it is difficult for the terminal to reselect to a TN cell of the first frequency, and the terminal may determine not to measure the first frequency, to avoid unnecessary measurement and save power consumption of the terminal.

In some embodiments, a frequency of the serving cell where the terminal is located is an NR frequency, and the first frequency includes at least one of: an NR frequency; or a frequency of an RAT other than NR. The RAT other than NR includes, but is not limited to, LTE and WLAN.

When the frequency of the serving cell where the terminal is located is the NR frequency, and the first frequency is also the NR frequency, the frequency of the serving cell where the terminal is located and the first frequency may be different, and the first frequency may be an NR inter-frequency relative to the frequency of the serving cell where the terminal is located.

When the frequency of the serving cell where the terminal is located is the NR frequency, and the first frequency is not the NR frequency, then the first frequency may be an inter-RAT frequency relative to the frequency of the serving cell where the terminal is located.

In some embodiments, sending the area information associated with the first frequency to the terminal includes at least one of: sending system information to the terminal, in which the first frequency is associated with information of at least one area in the system information; or sending system information to the terminal, in which information of at least one area is associated with the first frequency in the system information.

The system information sent by the network device may include frequency information and may also include area information.

For example, in a case that the system information includes the first frequency, when the terminal determines that the first frequency is associated with the information of at least one area, the terminal may determine that the area information associated with the first frequency is configured by the network device. For example, if the first frequency is fl and the area information is (reference point 1, radius 1), when the terminal determines that the fl is associated with the (reference point 1, radius 1) in the system information, the terminal may determine that the area information associated with the first frequency is configured by the network device.

For example, in a case that the system information includes the information of at least one area, when the terminal determines that the information of the at least one area is associated with the first frequency, the terminal may also determine that the area information associated with the first frequency is configured by the network device. For example, if the area information is (reference point 1, radius 1) and the first frequency is f1, when the terminal determines that the (reference point 1, radius 1) is associated with the fl in the system information, the terminal may determine that the area information associated with the first frequency is configured by the network device.

It needs to be noted that, in the system information, the first frequency may be associated with information of one area, or may be associated with information of a plurality of areas. The information of one area may be associated with one frequency, or may be associated with a plurality of frequencies.

It needs to be noted that for other contents involved in the embodiment, reference may be made to the descriptions of related contents in the above embodiments, which are not repeated here.

Corresponding to the embodiments of the method for measurement determination described above, the disclosure also provides embodiments of an apparatus for measurement determination.

FIG. 6 is a block diagram illustrating an apparatus for measurement determination according to an embodiment of the disclosure. As shown in FIG. 6, the apparatus for measurement determination includes a processing module 601.

The processing module 601 is configured to determine, based on whether area information associated with a first frequency is configured by a network device, whether to measure the first frequency.

In some embodiments, the processing module 601 is configured to perform at least one of: in a case that the area information associated with the first frequency is configured by the network device, and the terminal is within an area, determining to measure the first frequency; in a case that the area information associated with the first frequency is configured by the network device, and the terminal is not within an area, determining not to measure the first frequency; or in a case that the area information associated with the first frequency is not configured by the network device, determining to measure the first frequency.

In some embodiments, a reselection priority of the first frequency is higher than a reselection priority of a second frequency corresponding to a serving cell where the terminal is located.

In some embodiments, a reselection priority of the first frequency is lower than or equal to a reselection priority of a second frequency corresponding to a serving cell where the terminal is located, and the serving cell where the terminal is located does not fulfill a first condition.

In some embodiments, a reselection priority of the first frequency is lower than or equal to a reselection priority of a second frequency corresponding to a serving cell where the terminal is located, and the serving cell where the terminal is located fulfills a first condition; a reference location and a distance threshold for the serving cell are configured by the network device, and a distance from a location of the terminal to the reference location of the serving cell is greater than the distance threshold.

In some embodiments, the first condition includes at least one of: a cell selection level being higher than an inter-frequency level threshold; or a cell selection quality being higher than an inter-frequency quality threshold.

In some embodiments, the processing module is configured to perform at least one of: in a case that a service time and the area information associated with the first frequency are configured by the network device, and the terminal is within an area, determining to measure the first frequency before the service time; in a case that a service time and the area information associated with the first frequency are configured by the network device, and the terminal is not within an area, determining not to measure the first frequency before the service time; or in a case that a service time is configured by the network device, and the area information associated with the first frequency is not configured by the network device, determining to measure the first frequency before the service time.

In some embodiments, the processing module is configured to, in a case that the area information associated with the first frequency is configured by the network device, and the terminal fulfills a first criterion, determine not to measure the first frequency, in which the first criterion includes the terminal not being within an area.

In some embodiments, a frequency of the serving cell where the terminal is located is an NR frequency, and the first frequency includes at least one of: an NR frequency; or a frequency of a radio access technology other than NR.

In some embodiments, a relationship between the serving cell where the terminal is located and the area includes at least one of:
the serving cell being a serving cell in a NTN, and the area being an area in a NTN;
the serving cell being a serving cell in a NTN, and the area being an area in a TN;
the serving cell being a serving cell in a TN, and the area being an area in a TN; or
the serving cell being a serving cell in a TN, and the area being an area in a NTN.

In some embodiments, the processing module is configured to perform at least one of: in a case that the first frequency is associated with information of at least one area in received system information, determining that the area information associated with the first frequency is configured by the network device; or in a case that information of at least one area is associated with the first frequency in received system information, determining that the area information associated with the first frequency is configured by the network device.

In some embodiments, the processing module is configured to perform at least one of: in a case that a distance from a location of the terminal to a reference location of the area is less than or equal to a distance threshold of the area, determining that the terminal is within the area; or in a case that a distance from a location of the terminal to a reference location of the area is greater than a distance threshold of the area, determining that the terminal is not within the area.

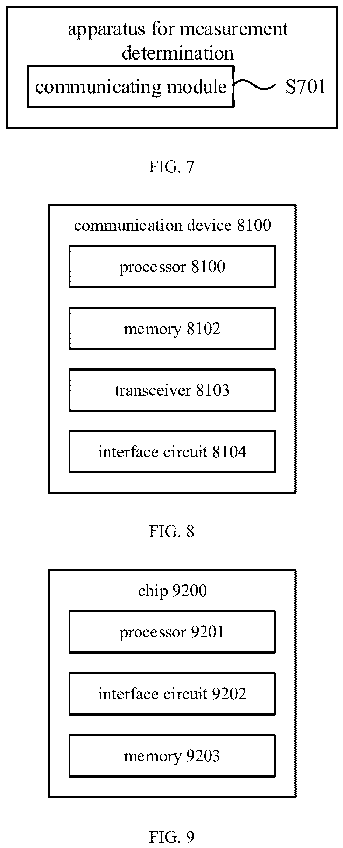

FIG. 7 is a block diagram illustrating an apparatus for measurement determination according to an embodiment of the disclosure. As shown in FIG. 7, the apparatus for measurement determination includes a communicating module 701.

The communicating module 701 is configured to communicate with the terminal performing the method for measurement determination according to any one of the above embodiments.

In some embodiments, the communicating module is further configured to send area information associated with a first frequency to the terminal, in which the area information includes a reference location and a distance threshold.

In some embodiments, a frequency of the serving cell where the terminal is located is an NR frequency, and the first frequency includes at least one of: an NR frequency; or a frequency of a radio access technology other than NR.

In some embodiments, a relationship between the serving cell where the terminal is located and the area includes at least one of:
the serving cell being a serving cell in a NTN, and the area being an area in a NTN;
the serving cell being a serving cell in a NTN, and the area being an area in a TN;
the serving cell being a serving cell in a TN, and the area being an area in a TN; or
the serving cell being a serving cell in a TN, and the area being an area in a NTN.

In some embodiments, the communicating module is configured to perform at least one of: sending system information to the terminal, in which the first frequency is associated with information of at least one area in the system information; or sending system information to the terminal, in which information of at least one area is associated with the first frequency in the system information.

For the apparatus embodiments, since the apparatus embodiments substantially correspond to the method embodiments, reference may be made to the descriptions of the corresponding parts in the method embodiments for relevant details. The apparatus embodiments described above are merely illustrative. The above modules described as separate parts may or may not be physically separated, the parts shown as modules may or may not be physical modules. That is, the above modules may be located in one place, or may be distributed to a plurality of network modules. Some or all modules may be selected according to the actual requirements to achieve the purpose of the solutions in embodiments of the disclosure. Those of ordinary skill in the art may understand and implement the solutions without creative efforts.

Embodiments of the disclosure also provide a communication device. The communication device includes: one or more processors, configured to call instructions and cause the communication device to implement the method for measurement determination according to any one of the above embodiments.

Embodiments of the disclosure also provide a communication system. The communication system includes: a terminal configured to perform the method for measurement determination according to any one of the above embodiments at the terminal side, and a network device configured to perform the method for measurement determination according to any one of the above embodiments at the network device side.

Embodiments of the disclosure also provide a storage medium. The storage medium stores instructions that, when executed on a communication device, cause the communication device to implement the method for measurement determination according to any one of the above embodiments.

The embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a procedure that the processor loads the profiles to implement a hardware circuit configuration may be understood as a procedure that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 8 is a block diagram illustrating a communication device 8100 according to an embodiment of the disclosure. The communication device 8100 may be a network device (e.g., an access network device, a core network device, etc.), a terminal (e.g., a user equipment), a chip, a system on chip or a processor that supports the network device to implement any one of the above methods, or a chip, a system on chip or a processor that supports the terminal to implement any one of the above methods. The communication device 8100 may be configured to implement the methods described in the method embodiments, which may refer to descriptions in the method embodiments.

As shown in FIG. 8, the communication device 8100 may include one or more processors 8101. The processor 8100 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), execute a computer program, and process data of the computer program. The processor 8101 is configured to call instructions so that the communication device 8100 may implement any one of the above methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and other steps are performed by the processor 8101.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 9 is a block diagram of a chip 9200 according to an embodiment of the disclosure. For a case where the communication device 9100 may be a chip or a chip system, reference may be made to the block diagram of the chip 9200 shown in FIG. 9, which it is not limited herein.

The chip 9200 includes one or more processors 9201. The processor 9201 is configured to call the instructions to cause the chip 9200 to execute any one of the above methods.

In some embodiments, the chip 9200 further includes one or more interface circuits 9202. The interface circuit 9202 is connected to a memory 9203. The interface circuit 9202 may be configured to receive signals from the memory 9203 or other devices, and may be configured to send the signals to the memory 9203 or other devices. For example, the interface circuit 9202 may read the instructions stored in the memory 9203 and send the instructions to the processor 9201. Optionally, the terms such as interface circuit, interface, transceiver pin, transceiver, etc. may be used interchangeably.

In some embodiments, the chip 9200 further includes one or more memories 9203 for storing instructions. Optionally, all or some of the memories 9203 may be located outside the chip 9200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

## Claims

1. A method for measurement determination, performed by a terminal, comprising:
determining, based on whether area information associated with a first frequency is configured by a network device, whether to measure the first frequency.

2. The method according to claim 1, wherein determining, based on whether the area information associated with the first frequency is configured by the network device, whether to measure the first frequency comprises at least one of:
in a case that the area information associated with the first frequency is configured by the network device, and the terminal is within an area, determining to measure the first frequency;
in a case that the area information associated with the first frequency is configured by the network device, and the terminal is not within an area, determining not to measure the first frequency; or
in a case that the area information associated with the first frequency is not configured by the network device, determining to measure the first frequency.

3. The method according to claim 2, wherein a reselection priority of the first frequency is higher than a reselection priority of a second frequency corresponding to a serving cell where the terminal is located.

4. The method according to claim 2, wherein a reselection priority of the first frequency is lower than or equal to a reselection priority of a second frequency corresponding to a serving cell where the terminal is located, and the serving cell where the terminal is located does not fulfill a first condition.

5. The method according to claim 2, wherein a reselection priority of the first frequency is lower than or equal to a reselection priority of a second frequency corresponding to a serving cell where the terminal is located, and the serving cell where the terminal is located fulfills a first condition; and
a reference location and a distance threshold for the serving cell are configured by the network device, and a distance from a location of the terminal to the reference location of the serving cell is greater than the distance threshold.

6. The method according to any one of claims 4 to 5, wherein the first condition comprises at least one of:
a cell selection level being higher than an inter-frequency level threshold; or
a cell selection quality being higher than an inter-frequency quality threshold.

7. The method according to claim 1, wherein determining, based on whether the area information associated with the first frequency is configured by the network device, whether to measure the first frequency comprises at least one of:
in a case that a service time and the area information associated with the first frequency are configured by the network device, and the terminal is within an area, determining to measure the first frequency before the service time;
in a case that a service time and the area information associated with the first frequency are configured by the network device, and the terminal is not within an area, determining not to measure the first frequency before the service time; or
in a case that a service time is configured by the network device, and the area information associated with the first frequency is not configured by the network device, determining to measure the first frequency before the service time.

8. The method according to claim 1, wherein determining, based on whether the area information associated with the first frequency is configured by the network device, whether to measure the first frequency comprises:
in a case that the area information associated with the first frequency is configured by the network device, and the terminal fulfills a first criterion, determining not to measure the first frequency, wherein the first criterion comprises the terminal not being within an area.

9. The method according to any one of claims 1 to 8, wherein a frequency of a serving cell where the terminal is located is a new radio (NR) frequency, and the first frequency comprises at least one of:
an NR frequency; or
a frequency of a radio access technology other than NR.

10. The method according to any one of claims 1 to 9, wherein a relationship between a serving cell where the terminal is located and the area comprises at least one of:
the serving cell being a serving cell in a non-terrestrial network, and the area being an area in a non-terrestrial network;
the serving cell being a serving cell in a non-terrestrial network, and the area being an area in a terrestrial network;
the serving cell being a serving cell in a terrestrial network, and the area being an area in a terrestrial network; or
the serving cell being a serving cell in a terrestrial network, and the area being an area in a non-terrestrial network.

11. The method according to any one of claims 1 to 10, further comprising at least one of:
in a case that the first frequency is associated with information of at least one area in received system information, determining that the area information associated with the first frequency is configured by the network device; or
in a case that information of at least one area is associated with the first frequency in received system information, determining that the area information associated with the first frequency is configured by the network device.

12. The method according to any one of claims 1 to 11, further comprising at least one of:
in a case that a distance from a location of the terminal to a reference location of the area is less than or equal to a distance threshold of the area, determining that the terminal is within the area; or
in a case that a distance from a location of the terminal to a reference location of the area is greater than a distance threshold of the area, determining that the terminal is not within the area.

13. A method for measurement determination, performed by a network device, comprising:
communicating with the terminal performing the method according to any one of claims 1 to 12.

14. The method according to claim 13, further comprising:
sending area information associated with a first frequency to the terminal, wherein the area information comprises a reference location and a distance threshold.

15. The method according to claim 14, wherein a frequency of a serving cell where the terminal is located is a new radio (NR) frequency, and the first frequency comprises at least one of:
an NR frequency; or
a frequency of a radio access technology other than NR.

16. The method according to any one of claims 14 to 15, wherein a relationship between a serving cell where the terminal is located and the area comprises at least one of:
the serving cell being a serving cell in a non-terrestrial network, and the area being an area in a non-terrestrial network;
the serving cell being a serving cell in a non-terrestrial network, and the area being an area in a terrestrial network;
the serving cell being a serving cell in a terrestrial network, and the area being an area in a terrestrial network; or
the serving cell being a serving cell in a terrestrial network, and the area being an area in a non-terrestrial network.

17. The method according to any one of claims 14 to 16, wherein sending the area information associated with the first frequency to the terminal comprises at least one of:
sending system information to the terminal, wherein the first frequency is associated with information of at least one area in the system information; or
sending system information to the terminal, wherein information of at least one area is associated with the first frequency in the system information.

18. An apparatus for measurement determination, comprising:
a processing module, configured to determine, based on whether area information associated with a first frequency is configured by a network device, whether to measure the first frequency.

19. An apparatus for measurement determination, comprising:
a communicating module, configured to communicate with the terminal performing the method according to any one of claims 1 to 12.

20. The apparatus according to claim 13, wherein the communicating module is further configured to send area information associated with a first frequency to the terminal, wherein the area information comprises a reference location and a distance threshold.

21. A communication device, comprising:
one or more processors, configured to invoke instructions and cause the communication device to implement the method according to any one of claims 1 to 12, or to implement the method according to any one of claims 13 to 17.

22. A communication system, comprising
a terminal configured to perform the method according to any one of claims 1 to 12, and a network device configured to perform the method according to any one of claims 13 to 17.

23. A storage medium storing instructions that, when executed on a communication device, cause the communication device to implement the method according to any one of claims 1 to 12, or to implement the method according to any one of claims 13 to 17.
